# EUROPÄISCHE PATENTSCHRIFT

(11) **EP 1 757 845 B1**
(45) Veröffentlichungstag und Bekanntmachung des Hinweises auf die Patenterteilung: **11.11.2009**
(21) Anmeldenummer: 06015797.1
(22) Anmeldetag: 28.07.2006
(51) Int. Cl.: F16H 63/20, F16H 63/30

(54) **Übertragungselement mit zur Übertragung von Betätigungsbewegungen**
Transmission element for the transmission of actuating-mouvements
Elément de transmission des mouvements d'actuation

(30) Priorität: 27.08.2005 DE 102005040704
(43) Veröffentlichungstag der Anmeldung: 28.02.2007
(73) Patentinhaber: Schaeffler KG, 91074 Herzogenaurach (DE)
(72) Erfinder: Schnapp, Peter, 90431 Nürnberg (DE); Reissberger, Stefan, 96193 Wachenroth (DE)

(56) Entgegenhaltungen:
- DE-A1- 4 432 382
- DE-A1- 19 831 066
- DE-A1- 19 924 275

## Beschreibung

### Gebiet der Erfindung

Die Erfindung betrifft ein Übertragungselement, das einer Welle zugeordnet ist, mit dem Betätigungsbewegungen übertragbar sind und das aus zumindest einem Blechsegment gebildet ist, wobei das Blechsegment wenigstens ein fingerartiges Betätigungselement aufnimmt, und wobei das Blechsegment zumindest abschnittsweise ein bogenförmig in Umfangsrichtung um die Schwenkachse des Übertragungselementes gekrümmt geformtes Blech ist.

### Hintergrund der Erfindung

Ein derartiges Übertragungselement ist in DE 44 32 382 A1 beschrieben. Die Übertragungselemente stehen in Schaltgetrieben von Fahrzeugen mit Schaltstangen oder Schaltwellen in Verbindung. Die Übertragungselemente übertragen Schalt- und oder Wählbewegungen und die damit verbundenen Kräfte von den Wellen auf weitere Schaltelemente wie Schaltmuffen und Gabeln und sind wechselweise auch zum Sperren bestimmter Wähl- oder Schaltbewegungen vorgesehen. Das Übertragungselement weist in diesem Fall eine Nabe für den Sitz auf der entsprechenden Schaltwelle oder Schaltstange auf. Der Sitz ist verschiebbar oder fest und wahlweise in Drehrichtung oder Schwenkrichtung um eine Schwenkachse des Übertragungselements gegen Verdrehen gesichert.

Das Übertragungselement der Gattung weist ein Segment einer Hülse aus Blech auf und ist in der Regel halbschalenförmig ausgebildet. Derartige Segmente und auch weitere Teile des Übertragungselements sind einfach und kostengünstig als Stanz- und oder Kaltumformteile wie durch Stanzen, Biegen, Prägen und Ziehen herzustellen und durch Schweißen oder Nieten miteinander zu verbinden. Da die Übertragungselemente aus Einzelteilen zusammengesetzt sind, lassen sich auch komplizierte Strukturen wie zum Beispiel Rastkonturen realisieren.

Auf dem Segment sitzt mindestens ein Betätigungselement in Form eines Schaltfingers und/oder in Form weiterer fingerartig abstehende Betätigungselemente, wie Sperrfinger oder Finger zum Betätigen von Schaltern oder ähnlichem. Die Übertragungselemente weisen in der Regel Segmente auf, mit denen möglichst viele Funktionen, wie wahlweise das Übertragen und alternativ das Sperren von Wähl- und Schaltbewegungen vorgenommen werden können. Die Segmente weisen dann auch zwei oder mehr der fingerartigen Betätigungselemente und auch durchgehende Aussparungen z.B für den Eingriff von Sperrelementen auf.

In modernen kompakten Fahrzeuggetrieben sind die einzelnen Getriebebauteile sehr eng ineinander angeordnet. Deshalb sind den Abmessungen und der Wandstärke der Einzelteile Grenzen gesetzt. Die Übertragungselemente, wie Schalt- und Sperrhülsen sind, diesen Anforderungen angepasst, aufgrund der beliebig zusammensetzbaren Struktur hinsichtlich des Bauraumes optimal Platz sparend auslegbar. Der Materialverbrauch zur Herstellung ist relativ gering. Es wird deshalb aus Gründen der Sparsamkeit und um so wenig wie möglich Bauraum zu beanspruchen angestrebt, Bleche mit geringen Ausgangstärken zur Herstellung der Übertragungselemente einzusetzen.

Der Dünnwandigkeit der einzelnen Elemente sind deshalb jedoch Grenzen gesetzt, da mittels der Übertragungselemente teils hohe Schaltkräfte übertragen werden. Die Abmessungen der Segmente sind deshalb an die Belastungen angepasst relativ groß, so dass sich diese bei Betätigungsbewegungen wie Schalt-, Wähl- und Sperrbewegungen nicht unzulässig verformen. Das um die entsprechend dimensionierten Übertragungselemente gebaute Getriebe ist, abweichend von optimaler Ausführung, entsprechend groß und schwer dimensioniert.

### Zusammenfassung der Erfindung

Die Aufgabe der Erfindung ist es daher, ein Übertragungselement zu schaffen, mit dem die zuvor genannten Nachteile vermieden werden.

Diese Aufgabe ist nach dem Gegenstand des Anspruches 1 und weiterer abhängiger Ansprüche gelöst. Das Blechsegment weist zumindest da wo das Betätigungselement von dem Blechsegment absteht, wenigstens eine radiale Verstärkung auf. Die radialen Abmessungen des Blechsegments an der Verstärkung sind mindesten größer als radiale Abmessungen mindestens aller weiteren beliebigen unmittelbar zur Verstärkung umfangsseitig benachbarter Abschnitte des Blechsegments oder aber aller weiteren beliebigen unmittelbar zur Verstärkung benachbarten Abschnitte des Blechsegmentes oder die Abschnitte zwischen der Verstärkung und einer Nabe.

Das Blechsegment weist demnach an der Stelle, wo das fingerartig abstehende Betätigungselement von dem Blech abgeht, eine Verdickung auf. Mit der Verdickung wird die Basis des Betätigungselementes am Segment verstärkt. Das Abbrechen oder Abreißen des Schaltfingers vom Segment wird verhindert.

Die Verstärkung ist zum Beispiel auf das Blechstück radial unterhalb des fingerartigen Betätigungselementes aufgesetzt und mit dem Blechsegment verschweißt oder, wie eine Ausgestaltung der Erfindung vorsieht, einstückig mit dem Blech ausgebildet.

Das Betätigungselement ist vorzugsweise ein Umformteil , beispielsweise aus dem Stahlwerkstoff 16MnCr5 aber auch aus beliebigen anderen Stählen, ist auf die Verstärkung mit dem dickeren Blech aufgesetzt und mit der Verstärkung, z.B. mit Laser- oder mit Widerstandsschweißen, verschweißt oder ist alternativ vernietet. Das Betätigungselement ist wahlweise von dem Blechsegment aus nach innen vorzugsweise radial von der Schwenkachse weg radial nach außen gerichtet.

Die gesamte Baueinheit des Übertragungselements ist vorzugsweise nach dem Zusammenbau zumindest an der gesamten Oberfläche oder zumindest an der Oberfläche der Schaltfinger gehärtet und ggf. gegen Korrosion beschichtet.

Alternativ dazu ist das Betätigungselement einstückig aus dem Material des Segments mit der Verstärkung aus dem dickeren Blech ausgebildet und hebelartig von dem Segment radial nach außen oder innen abgewinkelt. Das Material ist vorzugsweise Stahlwerkstoff, bevorzugt mit der Bezeichnung 16MnCr5.

Der verstärkte Abschnitt des Segmentes, auf dem das fingerartige Betätigungselement sitzt, steht aus Platzgründen und funktionsbedingt hebelartig von dem Rest des Blechsegments ab oder aus dem Blechsegment hervor und verläuft dabei vorzugsweise axial, d.h. in eine der Richtungen in die die Schwenkachse gerichtet ist. Alternativ ist das Segment zumindest beidseitig der Verstärkung in Umfangsrichtung zumindest so ausgespart, dass sich der Verstärkung zumindest umfangsseitig eine Ausnehmung anschließt und sich das Segment in beide axialen Richtungen mit schwächerem Blech fortsetzt.

Das Blechsegment ist von beliebiger Form, kann Rampenkonturen aufweisen und/oder ist, wie eine Ausgestaltung der Erfindung vorsieht, so halbschalenförmig ausgebildet, dass das Blechsegment zumindest abschnittsweise in beliebigen quer zur Schwenkachse verlaufenden Schnittebenen durch Radien beschrieben ist. Jeder der Radien beschreibt einen Bogen eines gedachten Kreissegmentes und geht senkrecht zur Schwenkachse strahlenförmig von der Schwenkachse aus. Der Bogen überspannt ein von der Schwenkachse ausgehendes Kreissegment. Das Bogenmaß ist höchstens π und somit ist der Bogenwinkel höchstens 180°.

Wenn das Übertragungselement eine Nabe aufweist, ist die Nabe ein Fließpressteil, Stanzteil oder ein Ziehteil, kann aber auch spanabhebend hergestellt sein. Die Nabe überbrückt den Abstand zwischen dem Wellensitz und dem Teil des Blechsegments entweder mit Vollmaterial oder durch eine entsprechende Blechkonstruktion aus Rohrabschnitten, Kragen und radialer Scheibe.

### Kurze Beschreibung der Zeichnungen

Die Erfindung wird nachfolgend anhand von Ausführungsbeispielen näher erläutert. Es zeigen:
- Figur 1: eine Frontalansicht eines Übertragungselementes mit einer gezogenen Nabe,
- Figur 2: die Seitenansicht des Übertragungselements nach Figur 1,
- Figur 3: einen Längsschnitt durch das Übertragungselement nach Figur 1, entlang der Linie III - III,
- Figur 4: ein alternatives Übertragungselement mit einer massiv ausgebildeten Nabe im Längsschnitt entlang der Schwenkachse des Übertragungselements
- Figur 5: ein Übertragungselement mit einer teilmassiv ausgebildeten Nabe im Längsschnitt entlang der Schwenkachse des Übertragungselements,
- Figur 6: ein Übertragungselement mit einer scheibenförmig ausgebildeten Nabe im Längsschnitt entlang der Schwenkachse des Übertragungselements,
- Figur 7: ein Übertragungselement, bei dem das fingerartige Betätigungselement einteilig mit der Verstärkung ausgebildet ist, im Längsschnitt entlang der Schwenkachse des Übertragungselements,
- Figur 8: ein Übertragungselement ohne Nabe, bei dem das Blechsegment mit einem Wellensitz versehen ist, im Längsschnitt entlang der Schwenkachse des Übertragungselements und
- Figur 9: ein Übertragungselement ohne Nabe, bei dem das Blechsegment auf der Welle sitzt, ohne die Welle zu umfassen, im Längsschnitt entlang der Schwenkachse des Übertragungselements.

### Detaillierte Beschreibung der Zeichnung

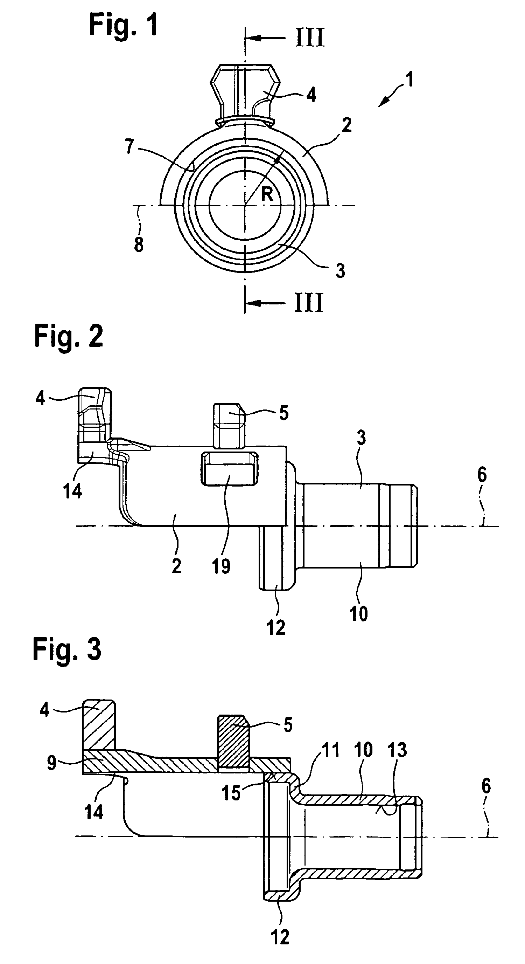

Die Figuren 1 bis 3 zeigen ein Übertragungselement 1 in verschiedenen Ansichten. Das Übertragungselement 1 ist aus zumindest einem Blechsegment 2, aus einer Nabe 3 und aus Betätigungselementen 4 und 5 gebildet. Die Nabe 3 ist ein Ziehteil aus Blech mit einer Hülse 10, mit einer Scheibe 11 und mit einem Kragen 12 und ist am Kragen 12 aufgeweitet. Die Hülse 10 ist ein zur Schwenkachse 6 konzentrischer Wellensitz 13 des Übertragungselements 1.

Das Blechsegment 2 ist radial zu dem Wellensitz 13 beabstandet mit einem Innenabschnitt 15 auf der Nabe 3 angeordnet, so dass die Nabe 3 eine Verbindung zwischen dem Blechsegment 2 und einer nicht dargestellten Welle ist. Von der Hülse 10 geht radial einstückig die Scheibe 11 nach außen ab. Der Kragen 12 ist als Sitz für das Blechsegment 2 von der Scheibe 11 abgewinkelt. Ein Teilabschnitt 16 des Blechsegments 2 steht axial gleichgerichtet mit der Schwenkachse 6 frei von der Nabe 3 ab und begrenzt dabei innenseitig zur Schwenkachse 6 hin ein "mit Luft ausgefülltes" Kreiszylindersegment in dem, wenn das Übertragungselement verbaut ist, zum Beispiel eine Teil eines Gehäuses eines Getriebes mit Abstand zum Segment angeordnet sein kann.

Das Blechsegment 2 nimmt die zwei fingerartig ausgebildeten Betätigungselemente 4 und 5 auf. Das Blechsegment 2, die Nabe 3 und die Betätigungselemente 4 und 5 sind Spanlosteile aus Stahl.

Das Blechsegment 2 ist abschnittsweise ein bogenförmig in Umfangsrichtung um die Schwenkachse 6 des Übertragungselementes 1 halbschalenförmig gekrümmt geformtes Blech. Wie aus Figur 1 hervorgeht ist das Blechsegment 1 so halbschalenförmig ausgebildet, dass das Blechsegment 1 zumindest in der quer zur Schwenkachse 6 verlaufenden Bildebene den im Bogen 7 eines gedachten und von dem Bogen 7 und einer Symmetrielinie 8 begrenzten Kreissegmentes überspannt. Das Bogenmaß des Bogens 7 ist in diesem Fall π und somit der Bogenwinkel 180°. Der Radius R des Kreissegments geht von der Schwenkachse 6 aus.

Das Blechsegment 2 weist da, wo das Betätigungselement 4 von dem Blechsegment 1 absteht, eine radiale Verstärkung 9 auf. Die radialen Abmessungen A des Blechsegments 2 an der Verstärkung 9 sind größer als radiale Abmessungen mindestens aller weiteren beliebigen unmittelbar zur Verstärkung 9 umfangsseitig und nabenseitig benachbarten beliebigen Abschnitte. Das Blechsegment 2 ist also an der Verstärkung 9 dicker als an jedem weiteren beliebigen Abschnitt des Blechsegments 2. Die Verstärkung 9 ist einstückig mit dem Blech ausgebildet, und beispielsweise in das Halbzeug Blech vor der oder während der Herstellung des Blechssegments 2 eingebracht.

Das Blechsegment 2 ist beidseitig der Verstärkung in Umfangsrichtung so ausgespart, dass zumindest ein Teil 14 des Blechsegments 2 mit der Verstärkung 9 axial gleichgerichtet mit der Schwenkachse 6 frei am weitesten aus dem Blechsegment 2 hervor steht. Das Teil 14 des Blechsegmentes 2 mit der Verstärkung 9 ragt hebelartig aus dem Blechsegment 2 in eine der Richtungen aus dem Blechsegment 2 hervor, in die die Schwenkachse 6 gerichtet ist. Das Betätigungselement 4 ist radial von der Schwenkachse 6 weggerichtet auf die Verstärkung 9 mit dem dickeren Blech aufgesetzt und zum Beispiel an dieser verschweißt. Das Betätigungselement 5 ist in das Blechsegment 2 eingesteckt und wahlweise mit dem Blechsegment 2 verschweißt oder vernietet. Dem Betätigungselement 5 schließt sich zumindest in eine Umfangsrichtung eine Aussparung 19 für den Eingriff eines weiteren nicht dargestellten Schalt- bzw. Sperrelements an.

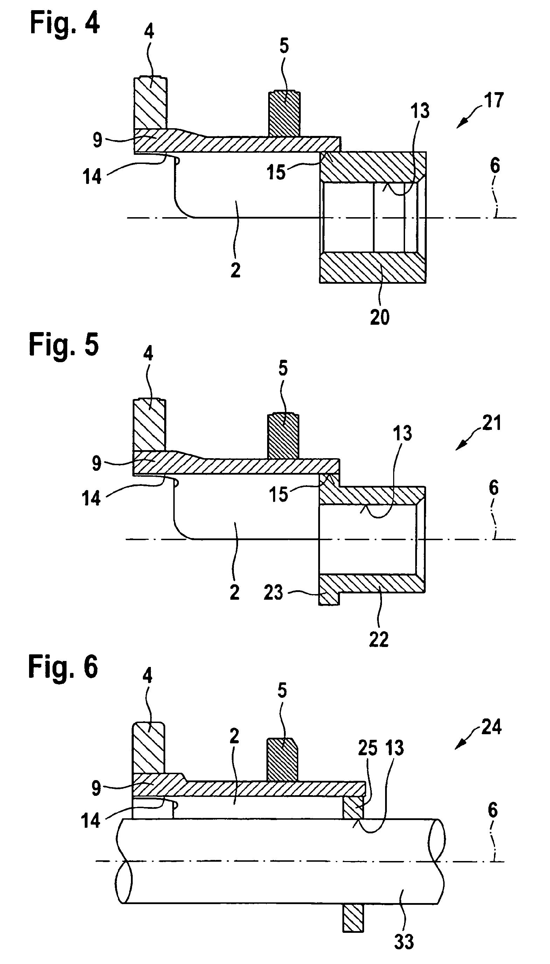

Figur 4 zeigt ein Übertragungselement 17, dessen wesentlicher Aufbau mit dem Blechsegment 2 und den Betätigungselementen 4 und 5 dem des Übertragungselementes 1 entspricht. Das Blechsegment 2 sitzt auf einer Nabe 20. Der radiale Spalt zwischen dem Wellensitz 13 und dem Innenabschnitt 15 ist mit dem Werkstoff der massiv als Schmiede- oder Sinterteil ausgeführten Nabe 20 ausgefüllt.

Figur 5 zeigt ein Übertragungselement 21, dessen wesentlicher Aufbau mit dem Blechsegment 2 und mit den Betätigungselementen 4 und 5 dem des Übertragungselementes 1 entspricht. Das Blechsegment 2 sitzt auf einer Nabe 22. Der radiale Spalt zwischen dem Wellensitz 13 und dem Innenabschnitt 15 ist durch die teil massiv als Fließpressteil ausgeführte Nabe 22 und den radialen Kragen 23 der Nabe 22 ausgefüllt.

Figur 6 zeigt ein Übertragungselement 24, dessen wesentlicher Aufbau mit dem Blechsegment 2 und den Betätigungselementen 4 und 5 dem des Übertragungselementes 1 entspricht. Das Blechsegment 2 sitzt auf einer nabenförmig ausgeführten Scheibe 25. Der radiale Spalt zwischen dem Wellensitz 13 auf der Welle 33 und dem Innenabschnitt 15 ist durch die Scheibe 25 ausgefüllt.

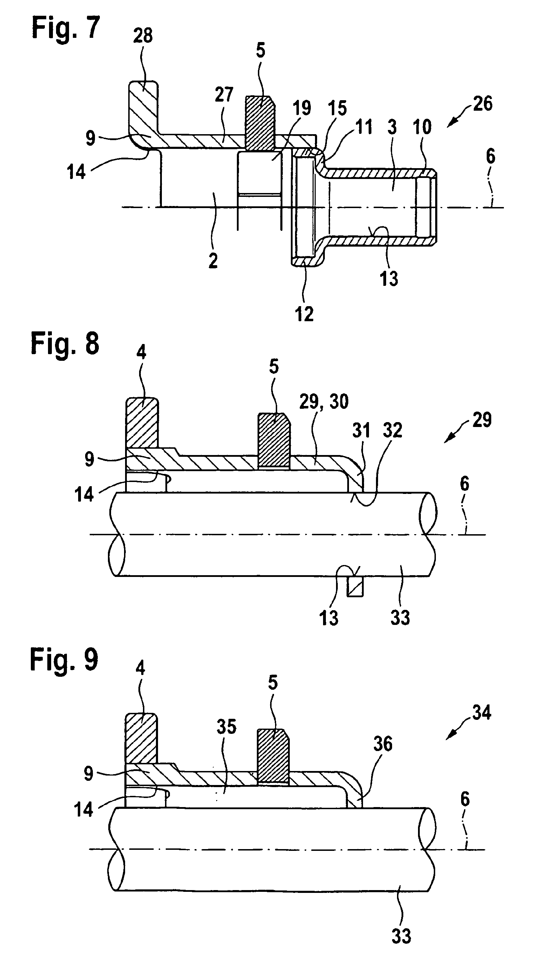

Figur 7 zeigt ein Übertragungselement 26, mit einem Blechsegment 27, an dem das Betätigungselement 28 einstückig mit der Verstärkung 9 aus dem dickeren Blech ausgebildet ist. Das Betätigungselement 28 ist aus dem Blech des Übertragungselements 26 abgewinkelt. Das Übertragungselement 26 sitzt in der schon beschriebenen Weise auf der Nabe 3 und die Nabe 3 ist für einen Press- oder Schiebesitz auf einer nicht dargestellten Welle vorgesehen.

Figur 8 zeigt ein Übertragungselement 29 ohne Nabe. Das Übertragungselement 29 ist das Blechsegment 30 und weist die Betätigungselemente 4 und 5 auf. Das Blechsegment 30 ist im wesentlichen ausgeführt wie das Blechsegment 2 des Übertragungssegments 1, weist jedoch abweichend dazu einen Radialarm 31 mit einem Durchgangsloch 32 auf. In dem Durchgangsloch 32 ist der Wellensitz 13 für eine Welle 33 ausgebildet.

In Figur 9 ist ein Übertragungselement 34 abgebildet. Das Übertragungselement 34 ist das Blechsegment 35 und weist die Betätigungselemente 4 und 5 auf. Das Blechsegment 35 ist im wesentlichen ausgeführt wie das Blechsegment 2 des Übertragungssegments 1, weist jedoch abweichend dazu einen Radialarm 36 auf, mit dem das Übertragungselement 34 auf der als schwenkbare und verschiebbare Schaltwelle ausgebildeten Welle 33 fest ist.

### Bezugszeichen

- 1: Übertragungselement
- 2: Blechsegment
- 3: Nabe
- 4: Betätigungselement
- 5: Betätigungselement
- 6: Schwenkachse
- 7: Bogen
- 8: Symmetrielinie
- 9: Verstärkung
- 10: Hülse
- 11: Scheibe
- 12: Kragen
- 13: Wellensitz
- 14: Teil mit Verstärkung
- 15: Innenabschnitt
- 16: Teilabschnitt
- 17: Übertragungselement
- 18: Nabe
- 19: Aussparung
- 20: Nabe
- 21: Übertragungselement
- 22: Nabe
- 23: Kragen
- 24: Übertragungselement
- 25: Scheibe
- 26: Übertragungselement
- 27: Blechsegment
- 28: Betätigungselement
- 29: Übertragungselement
- 30: Blechsegment
- 31: Radialarm
- 32: Durchgangsloch
- 33: Welle
- 34: Übertragungselement
- 35: Blechsegment
- 36: Radialarm

## Patentansprüche

1. Übertragungselement (1, 17, 21, 24, 26, 29, 34), das einer Welle (33) zugeordnet ist, mit dem Betätigungsbewegungen übertragbar sind und das aus zumindest einem Blechsegment (2, 27, 30, 35) gebildet ist, wobei das Blechsegment (2, 27, 30, 35) wenigstens ein fingerartiges Betätigungselement (4, 5, 28) aufnimmt, und wobei das Blechsegment (2, 27, 30, 35) zumindest abschnittsweise ein bogenförmig in Umfangsrichtung um die Schwenkachse (6) des Übertragungselementes (1, 17, 21, 24, 26, 29, 34) gekrümmt geformtes Blech ist, **dadurch gekennzeichnet, dass** das Blechsegment (2, 27, 30, 35), zumindest da wo zumindest eines der Betätigungselemente (4, 28) von dem Blechsegment (2, 27, 30, 35) absteht wenigstens eine radiale Verstärkung (9) aufweist, wobei die radialen Abmessungen des Blechsegments (2, 27, 30, 35) an der Verstärkung (9) größer sind als alle weiteren in radiale Richtung betrachteten Abmessungen aller weiteren beliebigen unmittelbar zur Verstärkung (9) umfangsseitig benachbarten Abschnitte des Blechsegments (2, 27, 30, 35).

2. Übertragungselement nach Anspruch 1, **dadurch gekennzeichnet, dass** das Übertragungselement (1, 17, 21, 24, 26) eine Nabe (3, 20, 22) mit dem Wellensitz (13) aufweist, wobei das Blechsegment (2, 27), radial zu der Welle (33) beabstandet, auf der Nabe (3, 20, 22) angeordnet ist, so dass die Nabe (3, 20, 22) eine Verbindung zwischen dem Blechsegment (2, 27) und der Welle (33) ist. (Fig. 1 - 7)

3. Übertragungselement nach Anspruch 1, **dadurch gekennzeichnet, dass** die radialen Abmessungen des Blechsegmentes (2, 27, 30, 35) an der Verstärkung (9) größer sind als radiale Abmessungen mindestens aller weiteren beliebigen unmittelbar zur Verstärkung (9) benachbarten Abschnitte des Blechsegmentes (2, 27, 30, 35) zwischen der Verstärkung (9) und der Nabe (3, 20, 22). (Fig. 1 - 9)

4. Übertragungselement nach Anspruch 1, **dadurch gekennzeichnet, dass** die Verstärkung (9) einstückig mit dem Blech ausgebildet ist. (Fig. 1 - 9)

5. Übertragungselement nach Anspruch 1, **dadurch gekennzeichnet, dass** das Blech an der Verstärkung (9) dicker ist als an jedem weiteren beliebigen Abschnitt des Blechsegmentes (2, 27, 30, 35). (Fig. 1 - 9)

6. Übertragungselement nach Anspruch 1, **dadurch gekennzeichnet, dass** das Betätigungselement (4) auf der Verstärkung (9) mit dem dickeren Blech aufgesetzt ist. (Fig. 1 - 6, 8, 9)

7. Übertragungselement nach Anspruch 6, **dadurch gekennzeichnet, dass** das Betätigungselement (4) am dickeren Blech mit der Verstärkung (9) verschweißt ist.

8. Übertragungselement nach Anspruch 1, **dadurch gekennzeichnet, dass** das Betätigungselement (28) einstückig mit der Verstärkung aus dem dickeren Blech ausgebildet ist. (Figur 7)

9. Übertragungselement nach Anspruch 8, **dadurch gekennzeichnet, dass** das Betätigungselement (28) aus dem Blech des Übertragungselements (26) abgewinkelt ist.

10. Übertragungselement nach Anspruch 9, **dadurch gekennzeichnet, dass** das Betätigungselement (4, 5, 28) radial von der Schwenkachse (6) weggerichtet ist. (Fig. 1- 9)

11. Übertragungselement nach Anspruch 1, **dadurch gekennzeichnet**, das zumindest ein Teil des Blechsegmentes (2, 27, 30, 35) mit der Verstärkung (9) hebelartig aus dem Blechsegment (2, 27, 30, 35) hervorragt. (Fig. 1 - 9)

12. Übertragungselement nach Anspruch 11, **dadurch gekennzeichnet, dass** der Teil des Blechsegmentes (2, 27, 30, 35) mit der Verstärkung (9) in eine der Richtungen aus dem Blechsegment (2, 27, 30, 35) hervorsteht, in die die Schwenkachse (6) gerichtet ist. (Fig. 1 - 9)

13. Übertragungselement nach Anspruch 1, **dadurch gekennzeichnet, dass** das Blechsegment (2, 27, 30, 35) beidseitig der Verstärkung (9) in Umfangsrichtung zumindest so ausgespart ist, dass sich der Verstärkung (9) zumindest umfangsseitig eine Ausnehmung anschließt. (Fig. 1 - 9)

14. Übertragungselement nach Anspruch 13, **dadurch gekennzeichnet, dass** das Blechsegment (2, 27, 30, 35) so ausgespart ist, dass zumindest ein Teil des Blechsegments (2, 27, 30, 35) mit der Verstärkung (9) axial gleichgerichtet mit der Schwenkachse (6) frei aus dem Blechsegment (2, 27, 30, 35) hervorsteht. (Fig. 1 - 9)

15. Übertragungselement nach Anspruch 14, **dadurch gekennzeichnet, dass** sich das Betätigungselement (4, 5, 28) radial dem Teil des Blechsegments (2, 27, 30, 35) anschließt, das am weitesten aus dem Blechsegment hervorsteht. (Fig. 1 - 9)

16. Übertragungselement nach Anspruch 1, **dadurch gekennzeichnet, dass** das Blechsegment (2, 27, 30, 35) so halbschalenförmig ausgebildet ist, dass das Blechsegment (2, 27, 30, 35) zumindest abschnittsweise in beliebigen quer zur Schwenkachse (6) verlaufenden Schnittebenen im Bogen (7) ein gedachtes Kreissegment überspannt, wobei das Bogenmaß des Bogens (7) höchstens π ist und wobei der Radius des Kreissegments von der Schwenkachse (6) ausgeht. (Fig. 1)

17. Übertragungselement nach Anspruch 1, **dadurch gekennzeichnet, dass** die Nabe (3, 20, 22), das Blechsegment (2, 27, 30, 35) und das Betätigungselement (4, 5, 28) Spanlosteile aus Stahl sind. (Fig. 1 - 9)

18. Übertragungselement nach Anspruch 1, **dadurch gekennzeichnet, dass** das Blechsegment (2) radial zur Welle (33) beabstandet ist und mit einem Innenabschnitt (15) auf der Nabe (20, 22) sitzt und dass radiale Abstände zwischen der Welle (33) und dem Innenabschnitt (15) mit dem Werkstoff der Nabe (20, 22) ausgefüllt sind. (Fig. 4, 5)

19. Übertragungselement nach Anspruch 18, **dadurch gekennzeichnet, dass** ein Teilabschnitt des Blechsegments (2) axial gleichgerichtet mit der Schwenkachse (6) frei von der Nabe (20, 22) absteht. (Fig. 4, 5)

20. Übertragungselement nach Anspruch 1, **dadurch gekennzeichnet, dass** die Nabe (3) ein Umformteil aus Blech mit einer Hülse (10), mit einer Scheibe (11) und mit einem Kragen (12) ist, wobei die Hülse (10) einen zur Schwenkachse (6) konzentrischen Wellensitz (13) aufweist und wobei die Scheibe (11) radial nach außen von der Hülse (10) abgeht sowie der Kragen (12) als Sitz für das Blechsegment (2) von der Scheibe (11) abgewinkelt ist. (Fig. 2, 3, 7)

21. Übertragungselement nach Anspruch 1, **dadurch gekennzeichnet, dass** das Betätigungselement (4, 5, 28) ein Schaltfinger ist. (Fig. 1 - 9)

## Claims

1. Transmission element (1, 17, 21, 24, 26, 29, 34) associated to a shaft (3), with which transmission element, actuating movements can be transmitted and which is formed by at least one sheet metal segment (2, 27, 30, 35), said sheet metal segment (2, 27, 30, 35) receiving at least one finger-like actuating element (4, 5, 28), and said sheet metal segment (2, 27, 30, 35) being a shaped sheet metal curved in peripheral direction at least partially into an arc shape around the axis of pivot (6) of the transmission element (1, 17, 21, 24, 26, 29, 34), **characterised in that** the sheet metal segment (2, 27, 30, 35) comprises at least one radial thickening (9) at least at a point at which at least one of the actuating elements (4, 28) projects from the sheet metal segment (2, 27, 30, 35), the radial dimensions of the sheet metal segment (2, 27, 30, 35) at the thickening (9) being larger than all other dimensions viewed in radial direction, of any other sections of the sheet metal segment (2, 27, 30, 35) directly adjoining the thickening (9) in peripheral direction.

2. Transmission element according to claim 1, **characterised in that** the transmission element (1, 17, 21, 24, 26) comprises a hub (3, 20, 22) having the shaft seat (13), the sheet metal segment (2, 27) being arranged on the hub (3, 20, 22) at a radial distance from the shaft (33), so that the hub (3, 20, 22) is a connection between the sheet metal segment (2, 27) and the shaft (33). (Fig. 1-7)

3. Transmission element according to claim 1, **characterised in that** the radial dimensions of the sheet metal segment (2, 27, 30, 35) at the thickening (9) are larger than radial dimensions of at least any other sections of the sheet metal segment (2, 27, 30, 35) directly adjoining the thickening (9) between the thickening (9) and the hub (3, 20, 22). (Fig. 1-9)

4. Transmission element according to claim 1, **characterised in that** the thickening (9) is made in one piece with the sheet metal. (Fig. 1-9)

5. Transmission element according to claim 1, **characterised in that** the sheet metal at the thickening (9) is thicker than in any other section of the sheet metal segment (2, 27, 30, 35). (Fig. 1-9)

6. Transmission element according to claim 1, **characterised in that** the actuating element (4) is seated on the thickening (9) with the thicker sheet metal. (Fig. 1-6, 8, 9)

7. Transmission element according to claim 6, **characterised in that** the actuating element (4) is welded on the thicker sheet metal to the thickening (9).

8. Transmission element according to claim 1, **characterised in that** the actuating element (28) is made in one piece with the thickening on the thicker sheet metal. (Fig. 7)

9. Transmission element according to claim 8, **characterised in that** the actuating element (28) is bent at an angle out of the sheet metal of the transmission element (26).

10. Transmission element according to claim 9, **characterised in that** the actuating element (4, 5, 28) points radially away from the axis of pivot (6). (1-9)

11. Transmission element according to claim 1, **characterised in that** at least a part of the sheet metal segment (2, 27, 30, 35) with the thickening (9) projects after the manner of a lever out of the sheet metal segment (2, 27, 30, 35). (Fig. 1-9)

12. Transmission element according to claim 11, **characterised in that** the part of the sheet metal segment (2, 27, 30, 35) with the thickening (9) protrudes in one of the directions out of the sheet metal segment (2, 27, 30, 35) in which the axis of pivot (6) is oriented. (Fig. 1-9)

13. Transmission element according to claim 1, **characterised in that** the sheet metal segment (2, 27, 30, 35) is relieved on both sides of the thickening (9) in peripheral direction at least to an extent that a recess adjoins the thickening (9) at least in peripheral direction. (Fig. 1-9)

14. Transmission element according to claim 13, **characterised in that** the sheet metal segment (2, 27, 30, 35) is relieved in such a way that at least a part of the sheet metal segment (2, 27, 30, 35) with the thickening (9) protrudes axially parallel to the axis of pivot (6) freely out of the sheet metal segment (2, 27, 30, 35). (Fig. 1-9)

15. Transmission element according to claim 14, **characterised in that** the actuating element (4, 5, 28) radially adjoins that part of the sheet metal segment (2, 27, 30, 35) that protrudes the most out of the sheet metal segment. (Fig. 1-9)

16. Transmission element according to claim 1, **characterised in that** the sheet metal segment (2, 27, 30, 35) is configured in the form of a semi-shell in such a way that the sheet metal segment (2, 27, 30, 35), in any plane of section extending crosswise to the axis of pivot (6), at least partially spans an imaginary circular segment in the arc (7), the radian measure of the arc being at the most π and the radius of the circular segment starting from the axis of pivot (6). (Fig. 1)

17. Transmission element according to claim 1, **characterised in that** the hub (3, 20, 22), the sheet metal segment (2, 27, 30, 35) and the actuating element (4, 5, 28) are parts made without chip removal out of steel (Fig. 1-9)

18. Transmission element according to claim 1, **characterised in that** the sheet metal segment (2) is radially spaced from the shaft (33) while being seated through an inner portion (15) on the hub (20, 22), and radial spaces between the shaft (33) and the inner portion (15) are filled with the material of the hub (20, 22). (Fig. 4, 5)

19. Transmission element according to claim 18, **characterised in that** a fractional section of the sheet metal segment (2) axially parallel to the axis of pivot (6) protrudes freely from the hub (20, 22). (Fig. 4, 5)

20. Transmission element according to claim 1, **characterised in that** the hub (3) is a shaped part made of sheet steel and comprises a bushing (10), a disk (11) and a collar (12), the bushing (10) comprises a shaft seat (13) which is concentric with the axis of pivot (6), the disk (11) projecting radially outwards from the bushing (10) and the collar (12) being angularly bent from the disk (11) to form a seat for the sheet metal segment (2). (Fig. 2, 3, 7)

21. Transmission element according to claim 1, **characterised in that** the activating element (4, 5, 28) is a gearshift finger. (Fig. 1-9)

## Revendications

1. Elément de transmission (1, 17, 21, 24, 26, 29, 34) qui est associé à un arbre (33) et avec lequel il est possible de transmettre des mouvements d'actionnement, cette élément de transmission (1, 17, 21, 24, 26, 29, 34) étant formé par, au moins, un segment de tôle métallique (2, 27, 30, 35), cette tôle métallique recevant, au moins, un élément d'actionnement (4, 5, 28) en forme de doigt en étant constitué d'une tôle métallique incurvée, au moins partiellement, en forme d'arc en direction périphérique autour d'un axe de pivotement (6) de l'élément de transmission (1, 17, 21, 24, 26, 29, 34), **caractérisé en ce que** le segment de tôle métallique (2, 27, 30, 35) comprend, au moins, un bourrelet (9) radial, au moins, à l'endroit où, au moins, l'un des éléments d'actionnement (4, 28) fait saillie à partir du segment de tôle métallique (2, 27, 30, 35), les dimensions radiales du segment de tôle métallique (2, 27, 30, 35) au niveau du bourrelet (9) étant supérieures, en regardant en direction radiale, à celles de toutes les autres parties quelconques du segment de tôle métallique (2, 27, 30, 35) qui sont directement adjacentes au bourrelet (9) en direction périphérique.

2. Elément de transmission selon la revendication 1, **caractérisé en ce que** l'élément de transmission (1, 17, 21, 24, 26) comprend un moyeu (3, 20, 22) qui comprend le siège (13) d'arbre, le segment de tôle métallique (2, 27) étant agencé sur le moyeu (3, 20, 22) à écart radial à l'arbre (33), de sorte que le moyeu (3, 20, 22) constitue une liaison entre le segment de tôle métallique (2, 27) et l'arbre (33). (figure 1-7)

3. Elément de transmission selon la revendication 1, **caractérisé en ce que** les dimensions radiales du segment de tôle métallique (2, 27, 30, 35) au niveau du bourrelet (9) sont supérieures aux dimensions radiales, au moins, de toutes les autres parties quelconques du segment de tôle métallique (2, 27, 30, 35) qui sont directement adjacentes au bourrelet (9) en étant situées entre le bourrelet (9) et le moyeu (3, 20, 22). (figure 1-9)

4. Elément de transmission selon la revendication 1, **caractérisé en ce que** le bourrelet (9) est configuré en une seule pièce avec la tôle métallique. (figure 1-9)

5. Elément de transmission selon la revendication 1, **caractérisé en ce que** la tôle métallique au niveau du bourrelet (9) est plus épaisse qu'à chaque autre partie quelconque du segment de tôle métallique (2, 27, 30, 35). (figure 1-9)

6. Elément de transmission selon la revendication 1, **caractérisé en ce que** l'élément d'actionnement (4) est assiégé sur le bourrelet (9) à tôle plus épaisse. (figure 1-6, 8, 9)

7. Elément de transmission selon la revendication 6, **caractérisé en ce que** l'élément d'actionnement (4) est soudé au bourrelet (9) à tôle plus épaisse.

8. Elément de transmission selon la revendication 1, **caractérisé en ce que** l'élément d'actionnement (28) est configuré en une seule pièce avec le bourrelet (9) à tôle plus épaisse. (figure 7)

9. Elément de transmission selon la revendication 8, **caractérisé en ce que** l'élément d'actionnement (28) est replié en équerre à partir de la tôle métallique de l'élément de transmission (26).

10. Elément de transmission selon la revendication 9, **caractérisé en ce que** l'élément d'actionnement (4, 5, 28) est orienté radialement à l'opposé de l'axe de pivotement (6). (figure 1-9)

11. Elément de transmission selon la revendication 1, **caractérisé en ce que**, au moins, une partie du segment de tôle métallique (2, 27, 30, 35) laquelle comprend le bourrelet (9) fait saillie à la manière d'un levier à partir du segment de tôle métallique (2, 27, 30, 35) (figure 1-9)

12. Elément de transmission selon la revendication 11, **caractérisé en ce que** la partie du segment de tôle métallique (2, 27, 30, 35) laquelle comprend le bourrelet (9) fait saillie à partir du segment de tôle métallique (2, 27, 30, 35) en l'une des directions dans lesquelles est orienté l'axe de pivotement (6) (figure 1-9)

13. Elément de transmission selon la revendication 1, **caractérisé en ce que** le segment de tôle métallique (2, 27, 30, 35) est évidé de part et d'autre du bourrelet (9) en direction périphérique, au moins, de telle façon qu'un évidement se raccorde au bourrelet (9), au moins, en direction périphérique. (figure 1-9)

14. Elément de transmission selon la revendication 13, **caractérisé en ce que** le segment de tôle métallique (2, 27, 30, 35) est évidé de telle façon que, au moins, une partie du segment de tôle métallique (2, 27, 30, 35) avec le bourrelet (9) s'étend axialement parallèlement à l'axe de pivotement (6) en faisant librement saillie à partir du segment de tôle métallique (2, 27, 30, 35). (figure 1-9)

15. Elément de transmission selon la revendication 14, **caractérisé en ce que** l'élément d'actionnement (4, 5, 28) se raccorde radialement à celle partie du segment de tôle métallique (2, 27, 30, 35) qui s'étend le plus loin à partir du segment de tôle métallique. (figure 1-9)

16. Elément de transmission selon la revendication 1, **caractérisé en ce que** le segment de tôle métallique (2, 27, 30, 35) est configuré en demi-coque de telle façon que, dans des plans de coupe quelconques s'étendant en travers de l'axe de pivotement (6), le segment de tôle métallique (2, 27, 30, 35) enjambe, au moins partiellement, un segment imaginaire de cercle dans l'arc (7), le radian de l'arc étant au maximum égal à π et le rayon du segment de cercle s'étendant à partir de l'axe de pivotement (6). (figure 1)

17. Elément de transmission selon la revendication 1, **caractérisé en ce que** le moyeu (3, 20, 22), le segment de tôle métallique (2, 27, 30, 35) et l'élément d'actionnement (4, 5, 28) sont des pièces formées en acier sans enlèvement de copeaux. (figure 1-9)

18. Elément de transmission selon la revendication 1, **caractérisé en ce que** le segment de tôle métallique (2, 27, 30, 35) est écarté de l'arbre (33) en direction radiale en étant assiégé par l'intermédiaire d'une section intérieure (15) sur le moyeu (20, 22), et **en ce que** des écarts radiaux entre l'arbre (33) et la section intérieure (15) sont remplis du matériau du moyeu (20, 22). (figure 4, 5)

19. Elément de transmission selon la revendication 18, **caractérisé en ce que** une section partielle du segment de tôle métallique (2) s'étendant axialement parallèlement à l'axe de pivotement (6) fait librement saillie à partir du moyeu (20, 22). (figure 4, 5)

20. Elément de transmission selon la revendication 1, **caractérisé en ce que** le moyeu (3) est une pièce formée en tôle et comprenant une douille (10), un disque (11) et un collet (12), la douille (10) comprenant un siège (13) d'arbre concentrique à l'axe de pivotement (6), **en ce que** le disque (11) s'étend radialement vers l'extérieur à partir de la douille (12), et **en ce que** le collet (12), pour former un siège pour le segment de tôle métallique (2), est replié en équerre à partir du disque (11). (figure 2, 3, 7)

21. Elément de transmission selon la revendication 1, **caractérisé en ce que** l'élément d'actionnement (4, 5, 28) est un doigt de changement de vitesse. (figure 1-9)
